# EUROPÄISCHE PATENTANMELDUNG

(11) **EP 2 139 061 A1**
(43) Veröffentlichungstag der Anmeldung: **30.12.2009**
(21) Anmeldenummer: 08011546.2
(22) Anmeldetag: 25.06.2008
(51) Int. Cl.: H01M 8/10, H01M 8/04

(54) **Membranbefeuchterzelle und Brennstoffzelleneinrichtung dieselbe enthaltend**

(71) Anmelder: Siemens Aktiengesellschaft, 80333 München (DE)
(72) Erfinder: Brandt, Torsten, 91052 Erlangen (DE); Datz, Armin, Dr., 91099 Poxdorf (DE); Hammerschmidt Albert Dr., 91056 Erlangen (DE); Latzel, Silke, 91077 Kleinsendelbach (DE); Lersch, Josef, 91336 Heroldsbach (DE); Mattejat, Arno, Dr., 91056 Erlangen (DE); Stühler, Walter, 96114 Hirschaid (DE); Voitlein, Ottmar, 91475 Lonnerstadt (DE)

(57) **Zusammenfassung**

Eine Membranbefeuchterzelle (1) zur Befeuchtung eines Gasstroms mit einer wasserdurchlässigen Membran (5) und mit mindestens einer an der Membran (5) anliegenden oder ihr gegenüberliegenden Stützlage aus faserigem Kohlepapier (40, 42) soll derart beschaffen sein, dass sie bei hoher Befeuchtungsleistung und bei hohem Wirkungsgrad besonders zuverlässig, ausfallsicher und wartungsarm arbeitet. Dazu ist erfindungsgemäß vorgesehen, dass zumindest die Fasern auf der von der Membran (5) abgewandten Oberfläche des Kohlepapiers (40, 42) mit einer Kunststoffschicht überzogen sind.

## Beschreibung

Die Erfindung betrifft eine Membranbefeuchterzelle zur Befeuchtung eines Gasstroms mit einer wasserdurchlässigen Membran und mit mindestens einer an der Membran anliegenden oder ihr gegenüber liegenden Stützlage aus Kohlepapier. Die Erfindung betrifft weiterhin eine Brennstoffzelleneinrichtung mit einer derartigen Membranbefeuchterzelle.

So genannte Protonenaustauschmembran-Brennstoffzellen (engl. Proton Exchange Membrane Fuel Cell, kurz PEMFC) benötigen zum Betrieb befeuchtete Betriebsgase, üblicherweise Wasserstoff (H₂) und Sauerstoff (O₂). Die Befeuchtung des jeweiligen Betriebsgases erfolgt beispielsweise in einer Membranbefeuchterzelle, die extern aufgestellt oder in einen Brennstoffzellenblock integriert sein kann. Eine derartige Membranbefeuchterzelle weist üblicherweise innerhalb eines Gehäuses mit integrierter Heizeinheit einen durch eine wasserdurchlässige Membran von einem Gasraum getrennten Befeuchtungswasserraum auf. Durch den Befeuchtungswasserraum strömt während des Betriebes von der Heizeinheit erhitztes Befeuchtungswasser, welches zum Teil durch die Membran hindurchdiffundiert und als gesättigter Dampf in den im Gasraum geführten Gasstrom übertritt und diesen damit befeuchtet. Ein Übertritt des zu befeuchtenden Gases in den Befeuchtungswasserraum ist durch die selektive Durchlässigkeit der Membran verhindert.

Bei der aus der EP 1 435 121 B1 bekannten Membranbefeuchterzelle ist die vergleichsweise empfindliche Membran zum Schutz vor direkter mechanischer Beanspruchung und vor zu großer Durchbiegung in der Art einer (symmetrischen) Sandwichbauweise zwischen zwei an ihr anliegenden Stützlagen aus wasserdurchlässigem Kohlepapier in einem Rahmenelement eingespannt. Damit ist insbesondere ein durchbiegungsbedingter Kontakt der Membran mit dem umliegenden metallischen Gehäuse bzw. mit der Heizeinheit, der zu unerwünschter Korrosion und zu einer verminderten Befeuchtungsleistung führen könnte, vermieden.

Es zeigt sich jedoch, dass sich bei großen Gasgeschwindigkeiten und bei Verwendung von Kohlepapier als Stützlage Kohlefasern lösen können, die dann unter Umständen von dem über das Kohlepapier strömenden Gasstrom mitgenommen werden. Dies kann zu Verstopfungen an engen Gasdurchlässen und in Sieben der Medienströme führen, was wiederum im ungünstigsten Fall den Ausfall des zugehörigen Brennstoffzellenmoduls zur Folge hat.

Der Erfindung liegt daher die Aufgabe zugrunde, eine Membranbefeuchterzelle der eingangs genannten Art anzugeben, die bei hoher Befeuchtungsleistung und bei hohem Wirkungsgrad besonders zuverlässig, ausfallsicher und wartungsarm arbeitet.

Diese Aufgabe wird erfindungsgemäß dadurch gelöst, dass zumindest die Fasern auf der von der Membran abgewandten Oberfläche des Kohlepapiers mit einer Kunststoffschicht überzogen sind.

Die Erfindung geht von der Überlegung aus, dass das beispielsweise aus der EP 1 435 121 B1 bekannte Konzept, wonach einer unerwünschten mechanischen Beanspruchung und Durchbiegung der wasserdurchlässigen Membran mit Hilfe mindestens einer Stützlage aus Kohlepapier entgegengewirkt wird, beibehalten werden sollte. Dabei sollte der auf der Hydrophilie und der großen wirksamen Oberfläche des Kohlepapiers beruhende Vorteil einer effektiven Befeuchtung des vorbeiströmenden Gases - wobei durch den hydrostatischen Druck entstehende Wassertröpfchen auf der Oberfläche des Kohlepapiers verteilt und durch den Gasstrom gasförmig mitgenommen werden - auch weiterhin möglichst konsequent ausgenutzt werden.

Andererseits sollte eine Ablösung einzelner Fasern vom Kohlepapier mit den oben genannten Folgeerscheinungen bereits im Ansatz vermieden sein. Anstatt beispielsweise die Strömungsgeschwindigkeit des Gasstroms zu begrenzen oder nur Kohlepapiere mit hoher mechanischer Stabilität des Faserverbundes zu verwenden oder Ersatzmaterialien wie etwa Sintermetalle, Gewebe oder Schäume einzusetzen, ist nach dem vorliegenden Konzept das Kohlepapier - zumindest auf der von der Membran abgewandten, dem jeweiligen Medienstrom und insbesondere dem Gasstrom unmittelbar ausgesetzten Seite - mit einer Beschichtung versehen, die die Abgabe von Fasern an den Gas- bzw. Wasserstrom verhindert. Die Fasern des Kohlepapiers werden daher vor dessen Einsatz im Membranbefeuchter im Rahmen eines Beschichtungsvorganges mit einer vergleichsweise dünnen Schicht eines geeigneten Kunststoffes überzogen, der im Wesentlichen zwei Aufgaben erfüllt:
● Die Fasern des Verbundes werden mechanisch verstärkt. Damit sind sie nicht mehr so anfällig gegen mechanische Belastungen, die sie aus dem Verbund herausbrechen könnten.
● Lose Fasern im bestehenden Faserverbund werden mit dem Kunststoff verklebt und dort festgehalten. Sie können nicht mehr durch mechanische oder hydrodynamische Kräfte freigesetzt werden.

Zur Beschichtung eignen sich Kunststoffe, die ähnliche Eigenschaften wie das Kohlepapier haben. Sie sollten bevorzugt hydrophil sein oder hydrophil gemacht werden können. Dies sind vorwiegend Thermoplaste oder Duroplaste.

Besonders geeignet sind die so genannten Polysulfone (PSU), eine Gruppe von im Allgemeinen transparenten, hydrolysefesten und chemisch beständigen Hochleistungskunststoffen. Allgemein sind Polysulfone Polymere, deren Wiederholungseinheiten durch Sulfongruppen (-SO₂) verknüpft sind. Dazu zählt man insbesondere auch die Polyethersulfone (PESU) und die Polyphenylsulfone (PPSU). Polysulfone sind elektrisch isolierenden Thermoplasten und zeichnen sich durch eine hohe mechanische Strapazierfähigkeit aus, die bei dem hier vorgesehenen Einsatzzweck von besonderem Vorteil ist. Wie auch das zu beschichtende Kohlepapier selbst sind sie stabil gegen die im Membranbefeuchter vorliegenden Medien (Wasserstoff, Sauerstoff sowie das stark saure Ionenaustauschermaterial der Membran). Sie bilden bevorzugt stark hydrophile Oberflächen aus, die sich vollständig mit Wasser benetzen lassen. Damit ist eine effektive Befeuchtung des vorbeigeführten Gasstroms ermöglicht.

Wenn die Oberfläche des beschichteten Kohlepapiers aus konstruktiven oder sonstigen Gründen nicht unbedingt stark hydrophil sein muss, können auch Fluorpolymere, beispielsweise Polytetrafluorethylen (PTFE), Perfluorethylenpropylen-Copolymer (FEP) oder Fluorkautschuk (FPM oder FKM), zur Beschichtung verwendet werden. Falls erforderlich, kann der Kunststoffüberzug anschließend durch eine geeignete chemische, physikalische oder mechanische Behandlung in seinen Oberflächeneigenschaften verändert werden. So kann z. B. durch einen chemischen Ätzvorgang die Oberfläche aufgeraut werden. Raue Oberflächen wirken in der Regel hydrophil, während glatte Oberflächen hydrophob wirken können. Eine derartige Nachbehandlung ist insbesondere bei Fluorpolymeren sinnvoll, die normalerweise hydrophob (wasserabstoßend) wirken.

Die Überziehung des Kohlefasergerüstes geschieht geeigneterweise durch Tränken des Kohlepapiers mit einer Lösung des verwendeten Kunststoffs. Dieser wird dazu in einem geeigneten Lösungsmittel aufgelöst, das Kohlepapier damit getränkt und danach das Lösungsmittel verdampft. Die Schichtdicke des Kunststoffüberzugs auf den Fasern wird durch das Mengenverhältnis von Lösungsmittel und Kunststoff eingestellt. Ist im Lösungsmittel viel Kunststoff enthalten und die Lösung dickflüssig, wird eine vergleichsweise dicke Schicht auf den Fasern abgeschieden. Ist wenig Kunststoff in einer großen Menge Lösungsmittel gelöst, die Lösung also dünnflüssig, dann werden relativ dünne Schichten abgeschieden.

Alternativ kann die Lösung auch durch Spritzen aufgebracht werden, so dass nur die benötigte Menge in das Kohlepapier eingebracht wird, die zum Umschließen der Fasern erforderlich ist, und keine oder nur wenig überschüssige Lösung.

Die mit der Erfindung erzielten Vorteile bestehen insbesondere darin, dass durch das Aufbringen bzw. Überziehen mit einer Kunststoffschicht ein gegenüber mechanischen und hydrodynamischen Belastungen strapazierfähiges Kohlepapier bereitgestellt wird, das sich besonders zum Einsatz als Stützelement oder Stützlage in einer Membrananordnung eines Membranbefeuchters bzw. einer Membranbefeuchterzelle eignet. Derartige Membranbefeuchterzellen kommen bevorzugt in einer Brennstoffzelleneinrichtung zum Einsatz, um die den Brennstoffzellen zugeführten Betriebsgasströme zu befeuchten.

Durch die variable Schichtdicke des Überzugs können auch Porosität und mechanische Eigenschaften des Kohlepapiers verändert und damit definiert eingestellt werden. So kann ein mechanisch zu schwaches Kohlepapier so weit verstärkt werden, dass es den mechanischen Eigenschaften am Einbauort genügt. Dies ist z. B. zweckmäßig wenn eine große Porosität gefordert ist, die naturgemäß aber mit einer geringen Festigkeit verbunden ist. Dabei werden andere Eigenschaften des Kohlepapiers, wie z. B. Dicke, Gewicht und Porosität nur so geringfügig verändert, dass dies bei der Verwendung nicht ins Gewicht fällt. Die beschichteten Kohlepapiere können also ohne weitere Änderungen an den Orten eingebaut werden, an denen vorher die unbeschichteten Papiere eingebaut waren.

Wie Versuche an Laborblockbefeuchtern gezeigt haben, ist insbesondere die Befeuchtungsleistung bei der Verwendung dieser beschichteten Papiere nur geringfügig verändert verglichen mit Befeuchtern mit unbeschichteten Papieren. Ebenso werden die Strömungsverhältnisse nur unwesentlich verändert, was sich in einem nahezu identischen Druckverlauf ausdrückt.

Ein Ausführungsbeispiel der Erfindung wird anhand einer Zeichnung näher erläutert. Darin zeigen:
- FIG 1: eine Draufsicht auf eine aufgeschnitten dargestellte Membranbefeuchterzelle,
- FIG 2: einen Schnitt durch die Membranbefeuchterzelle gemäß FIG 1,
- FIG 3: einen weiteren Schnitt durch die Membranbefeuchterzelle gemäß FIG 1,
- FIG 4: ein Diagramm, in dem Messergebnisse zur Befeuchtungsleistung verschiedener Membranbefeuchterzellen aufgetragen sind, und
- FIG 5: ein Diagramm mit Messwerten zum jeweils auftretenden Druckverlust innerhalb derartiger Membranbefeuchterzellen.

Gleiche Teile sind in allen Figuren mit denselben Bezugszeichen versehen.

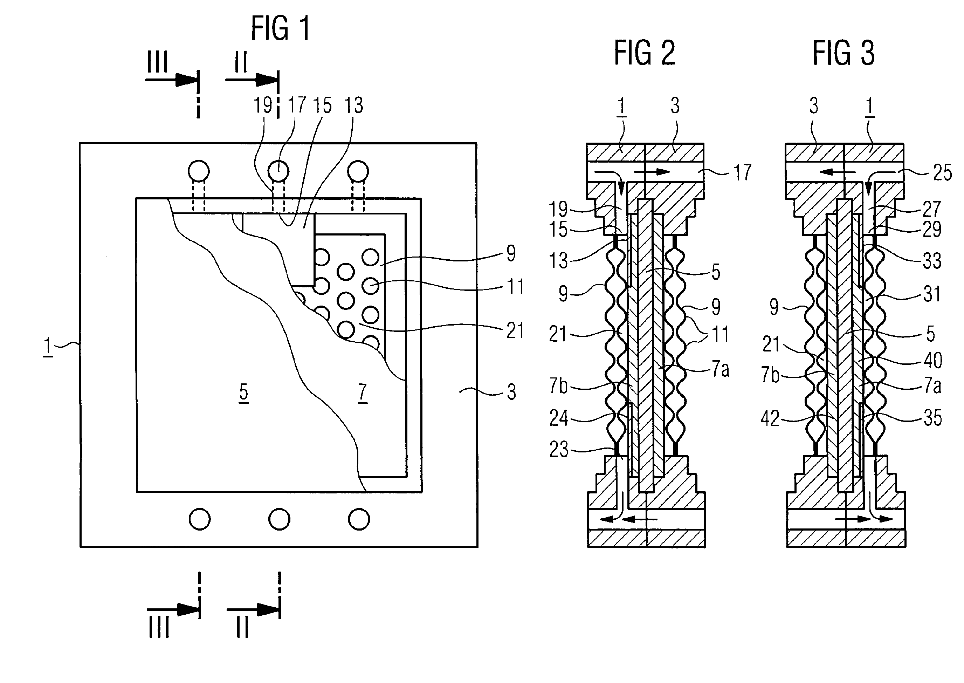

In FIG 1 ist in einer schematischen Draufsicht eine rechteckige und planare Befeuchtungszelle 1 dargestellt, die eine in einem Rahmen aus einem Dichtmaterial 3 eingebettet und aufgeschnitten dargestellte Membran 5 umfasst. Die Befeuchtungszelle 1 wird daher auch als Membranbefeuchterzelle bezeichnet. Unter der Membran 5 ist in ebenfalls aufgeschnittener Darstellung ein Stützelement 7 sichtbar. Unterhalb des Stützelements 7 ist eine Außenplatte 9 dargestellt, die als ein Blech mit einer Prägestruktur 11 ausgestaltet ist. Die Prägestruktur 11 besteht aus runden Erhöhungen bzw. Vertiefungen innerhalb der Außenplatte 9. Zwischen der Außenplatte 9 und dem Stützelement 7 ist ein Abdeckelement 13 angebracht. Das Abdeckelement 13 ist lediglich im Bereich eines Betriebsmitteleinlasses 15 angeordnet.

FIG 2 zeigt einen Schnitt durch die Befeuchtungszelle 1 entlang der Linie II-II. Die Befeuchtungszelle 1 ist Teil eines Befeuchtungszellenstapels einer Brennstoffzelleneinrichtung. Während des Betriebs der Befeuchtungszelle 1 strömt trockenes Betriebsgas durch den Axialkanal 17 der Befeuchtungszelle, welches nach erfolgter Befeuchtung in der Befeuchtungszelle 1 einer strömungsseitg nachgeschalteten Brennstoffzelle (nicht dargestellt) zugeführt werden soll. Der Axialkanal 17 ist parallel zur Stapelrichtung des Befeuchtungszellenstapels ausgerichtet. Vom Axialkanal 17 zweigt jeweils ein Radialkanal 19 ab. Das Betriebsgas strömt durch den Radialkanal 19 und im weiteren Verlauf durch den Betriebsmitteleinlass 15 und gelangt anschließend in den Gasraum 21 der Befeuchtungszelle 1. Nach Austritt aus dem Betriebsmitteleinlass 15 streicht das Betriebsgas ohne signifikante Turbulenzen zu bilden einerseits an dem Abdeckelement 13 und andererseits an der Außenplatte 9 der Befeuchtungszelle 1 entlang.

Die Außenplatte 9 ist als ein Heizelement ausgestaltet, das aus zwei Metallblechen zusammengesetzt ist. Zwischen den Metallblechen befindet sich ein Heizwasserraum, durch den während des Betriebs der Befeuchtungszelle 1 warmes Heizwasser strömt. Dieses Heizwasser heizt sowohl das durch die Befeuchtungszelle 1 strömende Betriebsgas wie auch das Befeuchtungswasser auf annähernd die Temperatur der Brennstoffzellen der Brennstoffzelleneinrichtung.

Im Gasraum 21 wird das Betriebsgas mit Befeuchtungswasser befeuchtet und gelangt nach Durchströmen des Gasraums 21 zum Betriebsmittelauslass 23 des Gasraums 21. Durch einen weiteren Radialkanal und einen weiteren Axialkanal strömend verlässt es im befeuchteten Zustand die Befeuchtungszelle 1 wieder. Auch im Bereich des Betriebsmittelauslasses 23 ist das Stützelement 7b durch ein weiteres Abdeckelement 24 abgedeckt, um Turbulenzen beim Einströmen des Betriebsgases in den Betriebsmittelauslass 23 zu verhindern.

FIG 3 zeigt einen Schnitt durch die Befeuchtungszelle 1 entlang der in FIG 1 dargestellten Linie III-III. Dieser Schnitt ist entlang eines Axialkanals 25 geführt, der während des Betriebs der Befeuchtungszelle 1 Befeuchtungswasser führt. Das Befeuchtungswasser strömt durch den Axialkanal 25 und gelangt durch den Radialkanal 27 zu einem Befeuchtungswassereinlass 29. Diesen Befeuchtungswassereinlass 29 durchströmend gelangt das Befeuchtungswasser in den Befeuchtungswasserraum 31 und strömt zwischen die Außenplatte 9 und ein Abdeckelement 33. Anschließend gelangt das Befeuchtungswasser zum Stützelement 7a, das ein durch einen chemischen, physikalischen oder mechanischen Prozess hydrophil gemachtes Kohlepapier 40 ist.

Das Kohlepapier 40 besteht beispielsweise aus graphitierten Kohlefasern, also vorzugsweise ausschließlich aus Kohlenstoff. Vorteilhaft ist eine gute Benetzbarkeit der Fasern, damit das Kohlepapier 40 das ankommende Befeuchtungswasser gewissermaßen aufsaugt und an die Membran 5 bringt. Die Benetzbarkeit ist durch eine Hydrophilierung sichergestellt, die beispielsweise durch eine entsprechende Beschichtung oder durch eine chemische, physikalische oder mechanische Veränderung der Faseroberfläche (Aufrauen) erreicht sein kann.

Ein Teil des Befeuchtungswassers durchdringt das hydrophile Kohlepapier 40 und gelangt zur Membran 5. Nach Durchtreten dieser wasserdurchlässigen Membran 5 durchdringt das Befeuchtungswasser auch das an der anderen Seite der Membran 5 angeordnete weitere Stützelement 7b, das ebenfalls ein Kohlepapier 42 ist. An der dem Gasraum 21 zugewandten Seite des Stützelements 7b verdampft das Befeuchtungswasser und befeuchtet somit das durch den Gasraum 21 strömende Betriebsgas. Ein weiterer Teil des Befeuchtungswassers durchströmt den Befeuchtungswasserraum 31 ungenutzt, streicht entlang einem weiteren Abdeckelement 35 und verlässt die Befeuchtungszelle 1 nach Durchströmen durch einen Radialkanal und einen weiteren Axialkanal wieder.

Die beiden Stützelemente 7a und 7b liegen lösbar an der wasserdurchlässigen Membran 5 an und bedecken die flachen Außenseiten der Membran 5 bis auf eine schmale Außenkante vollständig. Die beiden Stützelemente 7a und 7b bilden zusammen mit der Membran 5 eine Membran-Anordnung, die zwischen den beiden Außenplatten 9 der Befeuchtungszelle 1 eingeklemmt ist. Die Stützelemente 7a, 7b liegen somit auf der einen Seite an der Membran 5 an und auf der anderen Seite an einer der Außenplatten 9 an. Durch die Stützelemente 7a, 7b wird die Membran 5 fest in ihrer Position gehalten. Außerdem bewirken die Stützelemente 7a, 7b, dass die Membran 5 an keiner Stelle die Außenplatte 9 berühren kann und somit von einem Teil der Außenplatten 9 abgedeckt wird. Das Befeuchtungswasser und das Betriebsgas können somit entlang im Wesentlichen der gesamten Fläche der Membran 5 durch das Stützelement 7a zur Membran 5 hin dringen.

Um ein unerwünschtes Ablösen einzelner Fasern oder Gewebestücke, welche vom Gas- oder Befeuchtungswasserstrom mitgerissen werden könnten, von den die Stützelemente 7a, 7b bildenden Kohlepapieren 40, 42 zu verhindern, ist das jeweilige Kohlepapier 40 bzw. 42 allseitig mit einer Kunststoffbeschichtung überzogen. Hier im Ausführungsbeispiel handelt es sich um eine Beschichtung aus Polysulfon (PSU).

Zur Herstellung derartiger PSU-beschichteter Kohlepapiere wird beispielsweise zunächst eine PSU-Lösung bereitgestellt, bei der 0,5 Gew.-% bis 30 Gew.-% eines granularen Polysulfons in einem geeigneten Lösungsmittel, hier N-Methyl-2-Pyrrolidon (NMP), gelöst werden. Das Kohlepapier wird in die Lösung eingetaucht, so dass sie alle Fasern umschließt. Beim Herausnehmen des Kohlepapiers läuft ein Teil der Lösung wieder aus dem Kohlepapier heraus, bis nur noch ein dünner Film auf den Fasern zurückbleibt. Das leer gelaufene Papier wird dann in einem Ofen so lange erhitzt auf eine Temperatur zwischen der Verdampfungstemperatur des Lösungsmittels und der Zersetzungstemperatur des Kunststoffes, bis das gesamte Lösungsmittel verdampft ist.

Im Rahmen eines einfachen Laborversuches kann beispielsweise folgende detaillierte Prozedur durchlaufen werden:
Herstellung einer sechsprozentigen PSU-Lösung:
   - 940 g NMP (Reinheit > 99,5 %) in einer 1-1-Weithalsflasche vorlegen und mit Magnetrührer langsam 60 g Polysulfongranulat einrühren
   - nach ca. drei bis vier Stunden ist das Granulat gelöst

### 2. Beschichten des Kohlepapiers:

- Kohlepapier (typische Abmessung 0,37 mm x 40 cm x 40 cm) bereitlegen und gegebenenfalls wiegen
- in einer Imprägnierwanne ca. 70 ml der PSU-Lösung möglichst gleichmäßig verteilen
- Kohlepapier in die Imprägnierwanne mit der PSU-Lösung geben
- Kohlepapier mehrmals wenden bzw. drehen, bis die Benetzung gleichmäßig ist
- Kohlepapier langsam und vorsichtig aus der Lösung herausnehmen und auf ein Trockengestell unter Infrarot-Lampen legen
- Papier unter Infrarotlicht mehrfach wenden, der Trockenprozess dauert 30 min. bis 60 min. je nach Lampenintensität
- trockenes Kohlepapier im Heizofen ca. eine Stunde bei 140 °C trocknen
- danach gegebenenfalls Kohlepapier auswiegen (ca. 2,5 g Gewichtszunahme)
- zweiten Beschichtungsvorgang wie oben durchführen
- nach der Infrarot-Trocknung das Kohlepapier über Nacht im Umluftofen mindestens zwölf Stunden bei 160 °C ausheizen
- gegebenenfalls Kohlepapier abschließend auswiegen (insgesamt 5 g Gewichtszunahme).

Es versteht sich von selbst, dass einzelne oder mehrere der oben genannten Herstellungsschritte für eine Serienproduktion vom Fachmann geeignet abgewandelt, größenmäßig skaliert und prozesstechnisch automatisiert werden können.

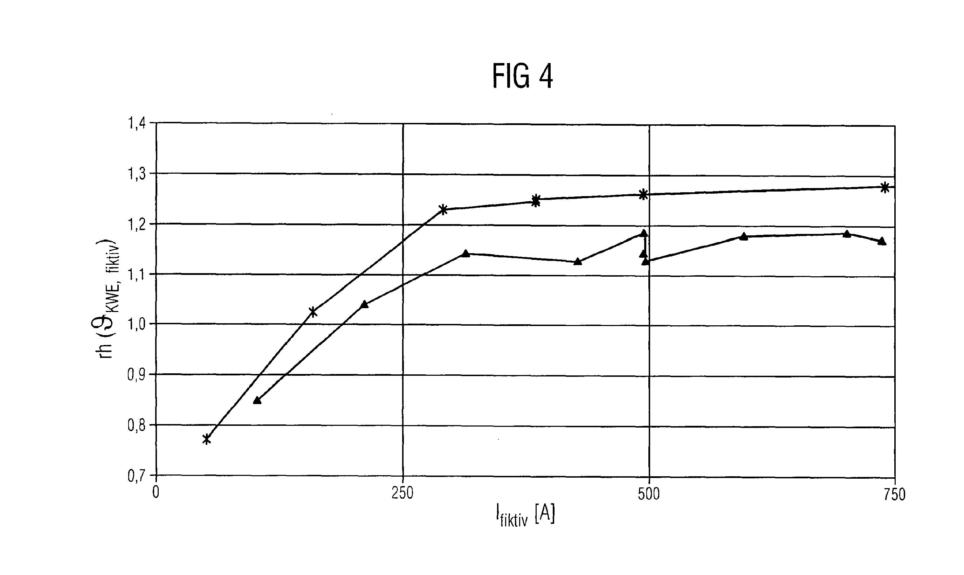

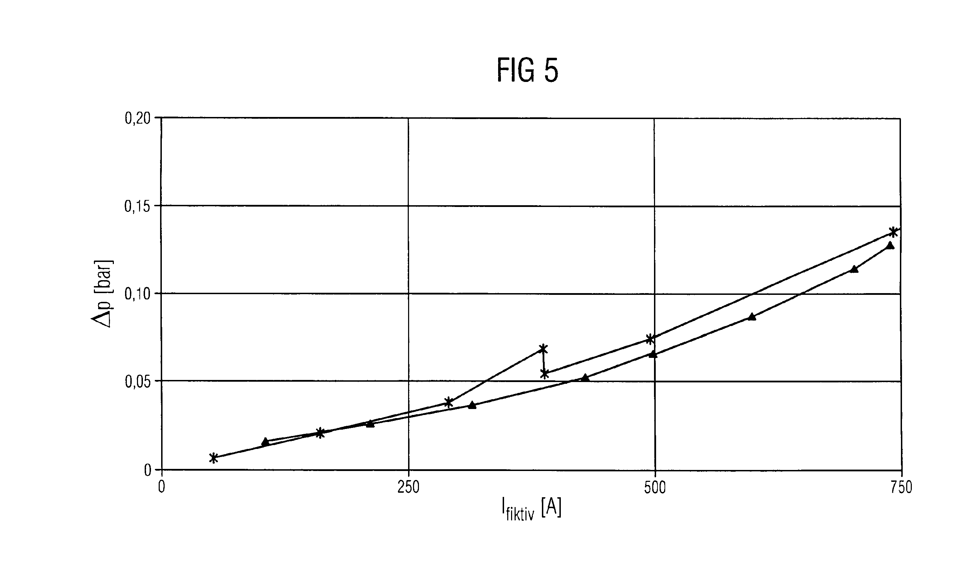

In FIG 4 und FIG 5 sind Ergebnisse von Vergleichsmessungen graphisch darstellt, die an Befeuchtungszellen mit unbeschichteten Kohlepapieren ("Standard-Kohlepapiere", einzelne Messpunkte sind durch Sterne markiert) einerseits und mit PSU-beschichteten Kohlepapieren (Messpunkte sind durch Dreiecke markiert) andererseits bei ansonsten identischen Randbedingungen (Ausgangsdruck konstant 2,6 bar, θ_{HWE}, soll = 75 °C) durchgeführt wurden. In FIG 4 ist die Befeuchtungsleistung rh als Funktion des von der zugeordneten Brennstoffzelle gelieferten Stromes I, berechnet aus dem Gasdurchsatz in der Befeuchterzelle, dargestellt. In FIG 5 ist der Druckverlust Δp des Gasstroms zwischen Befeuchtereintritt und Befeuchteraustritt als Funktion des Stromes dargestellt. Wie zu erkennen ist, unterscheiden sich die beschichteten und die unbeschichteten Kohlepapiere diesbezüglich überraschenderweise nur geringfügig.

## Patentansprüche

1. Membranbefeuchterzelle (1) zur Befeuchtung eines Gasstroms mit einer wasserdurchlässigen Membran (5) und mit mindestens einer an der Membran (5) anliegenden oder ihr gegenüberliegenden Stützlage aus faserigem Kohlepapier (40, 42),
**dadurch gekennzeichnet, dass**
zumindest die Fasern auf der von der Membran (5) abgewandten Oberfläche des Kohlepapiers (40, 42) mit einer Kunststoffschicht überzogen sind.

2. Membranbefeuchterzelle (1) nach Anspruch 1, wobei die Kunststoffschicht hydrophil ist.

3. Membranbefeuchterzelle (1) nach Anspruch 1 oder 2, wobei die Kunststoffschicht aus einem thermoplastischen oder aus einem duroplastischen Kunststoff gebildet ist.

4. Membranbefeuchterzelle (1) nach einem der Ansprüche 1 bis 3, wobei die Kunststoffschicht aus einem Polysulfon (PSU) gebildet ist.

5. Membranbefeuchterzelle (1) nach Anspruch 4, wobei die Kunststoffschicht durch Eintauchen des Kohlepapiers (40, 42) in ein mit Polysulfon versetztes Lösungsmittel, insbesondere N-Methyl-2-Pyrrolidon (NMP), und anschließendes Verdampfen des Lösungsmittels erzeugt ist.

6. Membranbefeuchterzelle (1) nach Anspruch 1, wobei die Kunststoffschicht aus einem Fluorpolymer gebildet ist.

7. Membranbefeuchterzelle (1) nach Anspruch 6, wobei die Oberfläche der Kunststoffschicht durch eine Nachbehandlung, insbesondere durch chemisches Ätzen, durch Plasmaätzen oder durch eine Ultraschallbehandlung, gegenüber dem ursprünglichen Herstellungszustand hydrophiliert ist.

8. Brennstoffzelleneinrichtung mit mindestens einer Brennstoffzelle und mit mindestens einer Membranbefeuchterzelle (1) nach einem der Ansprüche 1 bis 7 zur Befeuchtung eines der Brennstoffzelle zugeführten Betriebsgasstroms.

9. Verwendung eines mit einer Kunststoffschicht überzogenen Kohlepapiers (40, 42) als Stützlage in einer Membrananordnung einer Membranbefeuchterzelle (1).
